# EUROPÄISCHE PATENTSCHRIFT

(11) **EP 1 029 647 B1**
(45) Veröffentlichungstag und Bekanntmachung des Hinweises auf die Patenterteilung: **02.05.2002**
(21) Anmeldenummer: 99890059.1
(22) Anmeldetag: 18.02.1999
(51) Int. Cl.: B29C 45/27

(54) **Einspritzdüse**
Injection nozzle
Buse d'injection

(43) Veröffentlichungstag der Anmeldung: 23.08.2000
(73) Patentinhaber: Elast Kunststoffverarbeitungs-GmbH & Co. KEG, 4730 Heiligenberg (AT)
(72) Erfinder: Manigatter, Kurt, 4072 Alkoven (AT); Adelsgruber, Karl, 4511 Allhaming (AT); Reslhuber, Christian, 4491 Niederneukirchen (AT); Fattinger, Paul, 4730 Heiligenberg (AT)
(74) Vertreter: Babeluk, Michael, Dipl.-Ing. Mag.

(56) Entgegenhaltungen:
- EP-A- 0 022 009
- EP-A- 0 710 535
- EP-A- 0 818 295
- EP-A- 0 841 142
- WO-A-98/12038
- US-A- 5 427 519
- A. HÖRBURGER: "Düsenbauarten für Heisskanalwerkzeuge" KUNSTSTOFFE., Bd. 62, Nr. 7, Juli 1972 (1972-07), Seiten 418-424, XP002110494 CARL HANSER VERLAG. MUNCHEN., DE ISSN: 0023-5563

## Beschreibung

Die vorliegende Erfindung betrifft eine Einspritzdüse zum Einbringen von plastischen wärmehärtbaren Materialien in eine Spritzgußform mit einem im wesentlichen zylindrischen Grundkörper, an dessen einem Ende eine Düsenspitze angebracht ist, die dazu bestimmt ist, unter Druck an einer Formplatte anzuliegen, wobei in Längsrichtung des zylindrischen Grundkörpers ein Zuführkanal für das einzuspritzende Material vorgesehen ist, wobei weiters mindestens ein Kühlkanal vorgesehen ist, um die Einspritzdüse zu kühlen und wobei im Bereich des der Düsenspitze gegenüberliegenden Endes des zylindrischen Grundkörpers eine Anpreßfläche vorgesehen ist, um die Einspritzdüse auf die Formplatte zu drücken.

Wärmehärtbare Materialien im Sinne der Erfindung sind im wesentlichen Kunststoffe, die sich bei höheren Temperaturen verfestigen, oder vulkanisierende, elastomere Materialien, wie etwa Silikone oder Kautschuk. Solche Kunststoffe werden bei der Verarbeitung bei niedriger Temperatur über eine Spritzdüse in ein Formnest gespritzt, und vulkanisieren dort unter Wärmeeinfluß zum gewünschten Spritzgußteil aus. Dieses Formnest befindet sich in einer heißen Formplatte. Da sich die Spritzdüse bis in die heiße Formplatte hinein erstreckt, müssen Maßnahmen getroffen werden, um die Temperatur der Spritzdüse niedrig zu halten. Ansonsten würde das Material bereits in der Spritzdüse ausvulkanisieren und diese blockieren. Die Spritzdüse reicht von einer kalten Formplatte über eine Isolierplatte und eine Heizplatte bis zur heißen Formplatte. Sie ist in einer Bohrung angeordnet und allgemein gegenüber der heißen Formplatte isoliert. Am wirksamsten ist eine solche Isolierung durch einen Luftspalt zu lösen.

Aus der EP 0 841 142 A ist eine Einspritzdüse bekannt, bei der an einem Ende eine Düsenspitze vorgesehen ist. Am anderen Ende wird die Einspritzdüse durch eine elastische Dichtung als Ganzes so unter Druck gesetzt, daß eine ausreichende Abdichtung zwischen der Düsenspitze und einer entsprechend ausgeformten Formplatte erreicht wird.

Aus der WO 98/12038 ist eine Einspritzdüse bekannt, bei der der Anpreßdruck der Düsenspitze an eine Formplatte über Tellerfedern erreicht wird, die zwischen dem Grundkörper der Einspritzdüse und der Düsenspitze vorgesehen sind. Die beweglichen Teile sind jedoch störanfällig und die Konstruktion einer solchen Einspritzdüse ist aufwendig.

Aus der DE 31 43 748 A ist eine Form zum Spritzgießen bekannt, bei der zwischen der Spritzdüse und der Formplatte ein Druckstück eingefügt ist. Die Abdichtung zwischen Spritzdüse und Druckstück sowie zwischen Druckstück und Formplatte erfolgt dabei jeweils entweder durch das Anliegen zweier Stirnflächen aneinander oder durch eine enge Passung zweier Umfangsflächen. Auf diese Weise wird insbesonders verhindert, daß sich der Spalt zwischen Spritzdüse und Druckstück bzw. zwischen Druckstück und Formplatte nicht mit dem Material füllen kann. Durch eine entsprechende konstruktive Gestaltung und durch die Wahl geeigneter Materialien kann der Wärmeübergang zwischen Formplatte und Düse bei dieser bekannten Anordnung relativ gering gehalten werden. Nachteilig ist jedoch, daß die Abdichtung zwischen den Bauteilen eine Bearbeitung mit höchster Genauigkeit und engen Toleranzen erfordert. Weiters dürfen die Temperaturdifferenzen zwischen den einzelnen Bauteilen nicht zu groß werden, um unterschiedliche Wärmedehnungen zu vermeiden. Daher ist die in dieser Druckschrift offenbarte Lösung sehr aufwendig und mit einer komplizierten Fertigung verbunden.

Weiters ist aus der AT 401 253 B eine Spritzgußform bekannt, bei der eine Vorkammer vorgesehen ist, in die die Einspritzdüse mündet. Die Vorkammer ist dazu vorgesehen, sich beim Einspritzen mit Gußmaterial zu füllen und dadurch eine Isolierschicht auszubilden. Nachteilig bei dieser Vorrichtung ist die Gefahr, daß das Material in der Vorkammer aufgrund des Wärmeüberganges von der Formplatte her ausvulkanisiert und daß beim nächstfolgenden Guß ein bereits ausvulkanisiertes Material in das Formnest mitgerissen wird, was zu einer Qualitätsminderung des Spritzgußteiles führt.

Eine weitere Lösung ist beispielsweise in der EP 0 162 037 B offenbart, bei der auf die Düsenspitze eine schmale, dünnwandige Kanüle aufgesetzt ist. Dies stellt jedoch eine sehr filigrane, störanfällige Konstruktion dar, die hohem Verschleiß unterworfen ist. Die zylindrische Abdichtung der Düsenspitze in der Formplatte ist ebenfalls sehr problematisch und erfordert engste Fertigungstoleranzen. Die Kanülenspitze liegt bündig an der Eintrittsöffnung des Formnestes an.

Aufgabe der vorliegenden Erfindung ist es, eine Einspritzdüse zu schaffen, bei der die obigen Nachteile vermieden werden, und die bei einfachem Aufbau den erforderlichen Anpreßdruck der Düsenspitze an die Formplatte sicher gewährleistet.

Erfindungsgemäß wird diese Aufgabe dadurch gelöst, daß der Grundkörper der Einspritzdüse einen Kernteil aufweist, der von einer im wesentlichen rohrförmigen Hülse umgeben ist, daß die Düsenspitze und die Andrückfläche fest mit dem Kernteil verbunden sind, und daß der Kernteil in Längsrichtung elastisch komprimierbar und ausgebildet und in der Hülse in Axialrichtung beschränkt beweglich geführt ist.

Wesentlich an der vorliegenden Erfindung ist, daß die Einspritzdüse über ihre gesamte Länge auf Druck vorgespannt wird, um die nötige Anpreßkraft der Düsenspitze auf die Formplatte zu erreichen. Dabei ist jedoch kein gesondertes Federelement oder eine elastische Dichtung vorgesehen, da der Kernteil selbst als Federelement dient. Um die Gefahr eines Knickens der Düse zu verhindern, ist der Kernteil durch eine rohrförmige Hülse umgeben, die nicht auf Druck beansprucht wird. Auf diese Weise stellt die Hülse eine seitliche Führung für den Kernteil dar.

Die Herstellung der erfindungsgemäßen Einspritzdüse ist besonders einfach dadurch, daß vorzugsweise der Kühlkanal durch einen Raum gebildet wird, der durch den Kemteil und die Hülse begrenzt wird. Besonders günstig ist es, wenn der Kühlkanal im wesentlichen durch eine schraubenförmig am äußeren Umfang des Kernteils eingefräste Nut gebildet ist. Auf diese Weise kann eine optimale Kühlung erreicht werden.

In einer besonders begünstigten Ausführungsvariante der vorliegenden Erfindung ist vorgesehen, daß der Kernteil und die Hülse im Bereich der Düsenspitze miteinander verbunden sind und in dem Bereich des zylindrischen Grundkörpers, der der Düsenspitze gegenüber liegt, in Axialrichtung gleitbar gegeneinander abgedichtet sind. Auf diese Weise kann ein einfacher Aufbau mit einer sicheren Funktion erreicht werden.

Der Einbau der Einspritzdüse in die Spritzgußform wird dadurch erleichtert, daß vorzugsweise an der Außenseite der Hülse, in dem der Düsenspitze gegenüberliegenden Bereich, Dichtringe zum Abdichten der Einspritzdüse gegenüber einer sie aufnehmenden Bohrung vorgesehen sind. Dabei ist es besonders günstig, wenn die Anpreßfläche durch eine Stirnfläche des Kernteils gebildet ist.

Um eine ausreichend weiche Federkennlinie des Kernteils zu erreichen, ist es bevorzugt, wenn die Kühlkanäle 40% bis 70%, vorzugsweise 50% bis 60% der Querschnittsfläche des Kernteils ausmachen. Als Querschnittsfläche wird dabei der reine Rohrquerschnitt des Kernteils, also ohne die Bohrung für die Zufuhr des einzuspritzenden Materials gerechnet. Durch diesen relativ großen Anteil der Kühlkanäle wird eine relativ weiche Federkennlinie des Kernteils bei Druckbelastung in Axialrichtung erreicht. Die Wandstärke des Kernteils vor dem Ausfräsen der Kühlflüssigkeitskanäle beträgt typischerweise etwa 2,5 bis 3 mm bei einer Länge des Düsenkörpers von beispielsweise 78 mm.

Weiters betrifft die vorliegende Erfindung eine Spritzgußform für plastische wärmehärtbare Materialien mit einer Formplatte, die einen Einspritzkanal aufweist, der in einer Einspritzöffnung mündet, und mit einer thermisch gegenüber der Formplatte isolierten Einspritzdüse gemäß der oben beschriebenen Ausführung.

In der Praxis kann es vorkommen, daß die Düsenspitze seitlich geringfügig aus ihrer Idealposition verschoben ist. Um eine Änderung des Einspritzverhaltens durch einen solchen Versatz auszugleichen, ist es besonders günstig, wenn in der Formplatte eine Bohrung vorgesehen ist, die mit einer Bohrung der Düsenspitze der Einspritzdüse in Verbindung steht und wenn der Durchmesser der Bohrung der Formplatte größer ist als der der Bohrung in der Düsenspitze. Insbesonders kann der seitliche Versatz weitgehend ausgeschlossen werden, wenn an der Außenfläche der Hülse im Bereich der Düsenspitze eine Fläche zur radialen Abstützung und Führung der Einspritzdüse vorgesehen ist. Durch diese Maßnahmen wird sichergestellt, daß auch bei Fertigungstoleranzen oder dergleichen stets der gesamte Durchmesser der Düsenspitze für den Durchtritt der Spritzmasse zur Verfügung steht. Dies ist insbesonders dann wichtig, wenn mehrere Düsen vorgesehen sind, die in ein gemeinsames Formnest münden, da es hier wesentlich ist, daß die jeweiligen Einspritzmengen exakt prognostizierbar sind. Somit kann eine ungleichmäßige Beaufschlagung des Formnestes, die zu einer unerwünschten Schlierenbildung im Produkt führen kann, vermieden werden. Weiters ist dadurch gewährleistet, daß die Wärmeübertragung von der Formplatte zu den einzelnen Düsen immer gleich groß ausfällt, so daß auch die unvermeidliche Rückvulkanisation in die Düsenspitze gleichmäßig ist. Dadurch wird erreicht, daß beim Anguß eines neuen Produktteils an allen Düsen die gleichen Startbedingungen herrschen.

Mit der erfindungsgemäßen Einspritzdüse ist es möglich, Vielkavitätenwerkzeuge herzustellen, die jeweils Anspritzflächen bis zu einem Minimum von 0,015 mm² ermöglichen. Auf diese Weise kann die optische Qualität der hergestellten Produkte wesentlich verbessert werden.

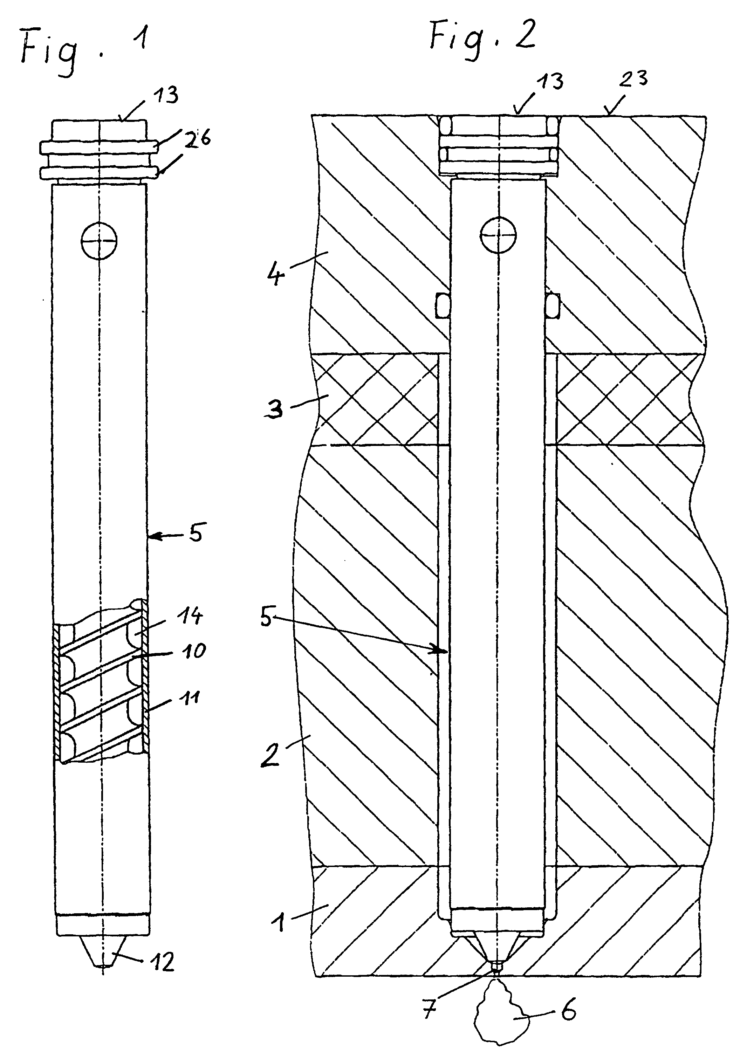

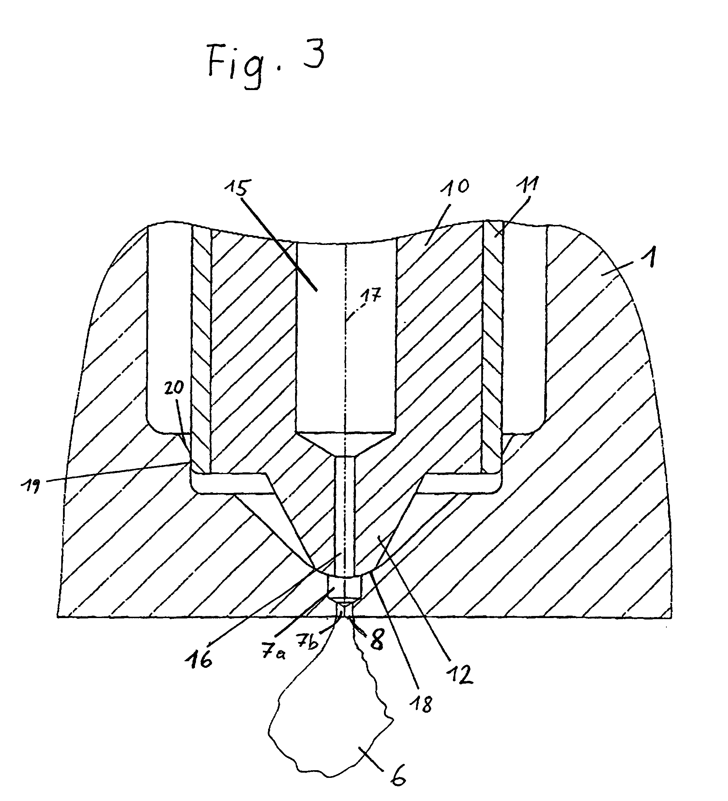

In der Folge wird die Erfindung anhand der in den Figuren dargestellten Ausführungsbeispiele näher erläutert. Es zeigen die Fig. 1 eine erfindungsgemäße Einspritzdüse in einem teilweisen Schnitt, die Fig. 2 einen Ausschnitt aus einer Spritzgußform, in der eine erfindungsgemäße Einspritzdüse eingebaut ist, in einem Schnitt, und die Fig. 3 ein Detail der Einspritzdüse von Fig. 1.

In der in der Fig. 2 dargestellten Spritzgußform sind übereinander eine Formplatte 1, eine Heizplatte 2, eine Temperaturschutzplatte 3 und eine Kühlplatte 4 übereinander angeordnet. In einer sich durch diese Bauteile erstreckenden Bohrung ist eine Düse 5 angeordnet, ein Formnest, daß sich im Anschluß an die Formplatte 1 befindet, ist mit 6 schematisch angedeutet. Die Formplatte 1 besitzt einen kurzen Einspritzkanal 7, der über eine Einspritzöffnung 8 in das Formnest 6 mündet.

In der Fig. list der Aufbau der Düse 5 detaillierter dargestellt. Die Einspritzdüse 5 besteht aus einem Kernteil 10, der von einer Hülse 11 umgeben ist. Am unteren Ende des Kernteils 10 ist die Düsenspitze 12 einstückig angeformt. Die obere Stirnfläche 13 des Kernteils 10 ist als Anpreßfläche ausgeführt. Eine schraubenförmig ausgefräste Nut 14 des Kernteils bildet einen Kühlkanal, der nach außen hin durch die Hülse 11 abgeschlossen ist. Im oberen Bereich des Kernteils 10 sind nicht dargestellte Dichtringe vorgesehen, um die Abdichtung der Einspritzdüse 5 gegenüber der Kühlplatte 4 zu gewährleisten, die zwischen Stegen 26 angeordnet sind.

Der Kernteil 10 und die Hülse 11 sind im Bereich der Düsenspitze 12 durch Hartlöten verbunden. Im gegenüberliegenden oberen Bereich sind diese Teile verschiebbar durch O-Ringe abgedichtet.

In der Fig. 3 ist ein Detailbereich der Düsenspitze 12 im vergrößerten Maßstab dargestellt. Es ist ersichtlich, daß der Zufuhrkanal 15 für das einzuspritzende Material im Bereich der Düsenspitze 12 in eine Bohrung 16 geringen Durchmessers übergeht. Der Durchmesser der Bohrung 16 in der Düsenspitze 12 ist geringer als der Durchmesser des Abschnitts 7a der Bohrung in der Formplatte 1, der zur Düsenspitze 12 hin orientiert ist. In einem zum Formnest 6 hin orientierten Abschnitt 7b ist eine Verjüngung auf einen geringeren Durchmesser vorgesehen. Die Düsenspitze 12 besitzt im Bereich der Achse 17 der Einspritzdüse 5 einen sphärisch konvex geformten Abschnitt 18, der an einem entsprechenden sphärisch konkaven Abschnitt der Formplatte 1 anliegt. Auf diese Weise wird eine gewisse Selbstzentrierung der Düsenspitze 12 erreicht. Zusätzlich zu dieser Selbstzentrierung ist jedoch in der Formplatte 1 ein Zentrierbund 19 vorgesehen, der bei 20 nach oben hin abgeschrägt ist. Durch den Zentrierbund 19 wird die Hülse 11 in ihrem untersten Abschnitt in Radialrichtung geführt. Die Berührungsfläche des Zentrierbundes 19 mit der Hülse 11 der Einspritzdüse 5 ist so gering als möglich ausgeführt, um den Wärmeübergang von der Formplatte 1 auf die Einspritzdüse 5 so klein als möglich zu halten.

Die Einspritzdüse 5 ist so ausgeführt, daß in dem in der Fig. 2 dargestellten Zustand die Anpreßfläche 13 geringfügig über die Oberfläche 23 der Kühlplatte 4 vorsteht. Wenn nun ein entsprechender Deckel (nicht dargestellt) auf die Fläche 23 gepreßt wird, so wird der Kernteil 10 der Einspritzdüse 5 elastisch auf Druck beansprucht, und dementsprechend an der sphärischen Fläche 18 ein Druck erzeugt, der ausreicht, um ein unerwünschtes seitliches Austreten des einzuspritzenden Materials zu verhindern. Da der Kernteil selbst den elastischen Bauteil darstellt, ist es nicht erforderlich, zusätzliche Federelemente oder dergleichen vorzusehen. Durch die große Federlänge, die sich über die Gesamtlänge der Düse erstreckt, ist die erfindungsgemäße Vorrichtung im Gegensatz zu bekannten Vorrichtungen weitgehend unabhängig von Herstellungstoleranzen oder dergleichen. Dies verbessert die Betriebssicherheit und führt zu einer Verringerung der Kosten.

## Patentansprüche

1. Einspritzdüse (5) zum Einbringen von plastischen wärmehärtbaren Materialien in eine Spritzgußform mit einem im wesentlichen zylindrischen Grundkörper, an dessen einem Ende eine Düsenspitze (12) angebracht ist, die dazu bestimmt ist, unter Druck an einer Formplatte (1) anzuliegen, wobei in Längsrichtung des zylindrischen Grundkörpers ein Zuführkanal (15) für das einzuspritzende Material vorgesehen ist, wobei weiters mindestens ein Kühlkanal (14) vorgesehen ist, um die Einspritzdüse (5) zu kühlen und wobei im Bereich des der Düsenspitze (12) gegenüberliegenden Endes des zylindrischen Grundkörpers eine Anpreßfläche (13) vorgesehen ist, um die Einspritzdüse (5) auf die Formplatte (1) zu drücken, **dadurch gekennzeichnet, daß** der Grundkörper der Einspritzdüse (5) einen Kernteil (10) aufweist, der von einer im wesentlichen rohrförmigen Hülse (11) umgeben ist, daß die Düsenspitze (12) und die Andrückfläche fest mit dem Kernteil (10) verbunden sind, und daß der Kernteil (10) in Längsrichtung elastisch komprimierbar ausgebildet und in der Hülse (11) in Axialrichtung beschränkt beweglich geführt ist.

2. Einspritzdüse (5) nach Anspruch 1, **dadurch gekennzeichnet, daß** der Kühlkanal (14) durch einen Raum gebildet wird, der durch den Kernteil (10) und die Hülse (11) begrenzt wird.

3. Einspritzdüse (5) nach Anspruch 2, **dadurch gekennzeichnet, daß** der Kühlkanal (14) im wesentlichen durch eine schraubenförmig am äußeren Umfang des Kernteils (10) eingefräste Nut gebildet ist.

4. Einspritzdüse (5) nach einem der Ansprüche 1 bis 3, **dadurch gekennzeichnet, daß** der Kernteil (10) und die Hülse (11) im Bereich der Düsenspitze (12) miteinander verbunden sind und in dem Bereich des zylindrischen Grundkörpers, der der Düsenspitze (12) gegenüberliegt, in Axialrichtung gleitbar gegeneinander abgedichtet sind.

5. Einspritzdüse (5) nach einem der Ansprüche 1 bis 4, **dadurch gekennzeichnet, daß** an der Außenseite der Hülse (11), in dem der Düsenspitze (12) gegenüberliegenden Bereich, Dichtringe zum Abdichten der Einspritzdüse (5) gegenüber einer sie aufnehmenden Bohrung vorgesehen sind.

6. Einspritzdüse (5) nach einem der Ansprüche 1 bis 5, **dadurch gekennzeichnet, daß** die Anpreßfläche (13) durch eine Stirnfläche (13) des Kernteils (10) gebildet ist.

7. Einspritzdüse (5) nach einem der Ansprüche 1 bis 6, **dadurch gekennzeichnet, daß** die Kühlkanäle 40% bis 70%, vorzugsweise 50% bis 60% der Querschnittsfläche des Kernteils (10) ausmachen.

8. Spritzgußform für plastische wärmehärtbare Materialien mit einer Formplatte (1), die einen Einspritzkanal aufweist, der in einer Einspritzöffnung mündet, und mit einer thermisch gegenüber der Formplatte (1) isolierten Einspritzdüse (5) gemäß einem der Ansprüche 1 bis 7.

9. Spritzgußform nach Anspruch 8, **dadurch gekennzeichnet, daß** in der Formplatte (1) eine Bohrung (8) vorgesehen ist, die mit einer Bohrung (16) der Düsenspitze (12) der Einspritzdüse (5) in Verbindung steht und daß der Durchmesser der Bohrung (7a) der Formplatte (1) größer ist als der der Bohrung (16) in der Düsenspitze (12).

10. Spritzgußform nach einem der Ansprüche 8 oder 9, **dadurch gekennzeichnet, daß** in der Formplatte (1) an der Außenfläche der Hülse (11) im Bereich der Düsenspitze (12) eine Fläche zur radialen Abstützung und Führung der Einspritzdüse (5) vorgesehen ist.

## Claims

1. Injection nozzle (5) for introducing thermosetting plastic materials into an injection mould with a substantially cylindrical base member, a nozzle tip (12), which is adapted to abut under pressure on a moulding plate, being arranged at one end thereof, a feed channel (15) for feeding the material to be injected being provided in the longitudinal direction of the cylindrical base member, at least one cooling channel (14) being further provided for cooling the injection nozzle (5) and a pressure face (13) for pressing the injection nozzle (5) against the moulding plate (1) being provided in the region of the end of the cylindrical base member that lies opposite the nozzle tip (12), **characterized in that** the base member of the injection nozzle (5) is provided with a core piece (10) that is surrounded by a substantially tubular sleeve (11), that the nozzle tip (12) and the pressure face are solidly connected to the core piece (10) and that the core piece (10) is adapted to be elastically compressible in longitudinal direction and to move axially in the sleeve (11) with its movements being guided and limited.

2. Injection nozzle (5) according to claim 1, **characterized in that** the cooling channel (14) is defined by a space that is bounded by the core piece (10) and the sleeve (11).

3. Injection nozzle (5) according to claim 2, **characterized in that** the cooling channel (14) is substantially constituted by a groove that is milled in a screw-like fashion on the outer periphery of the core piece (10).

4. Injection nozzle (5) according to one of the claims 1 through 3, **characterized in that** the core piece (10) and the sleeve (11) are joined together in the region of the nozzle tip (12) and that they are slidably sealed in axial direction relative to one another in the region of the cylindrical base member that lies opposite the nozzle tip (12).

5. Injection nozzle (5) according to one of the claims 1 through 4, **characterized in that** sealing rings for isolating the injection nozzle (5) from a bore adapted to receive it are provided on the outer side of the sleeve (11) in the region opposite the nozzle tip (12).

6. Injection nozzle (5) according to one of the claims 1 through 5, **characterized in that** the pressure face (13) is formed by a front face (13) of core piece (10).

7. Injection nozzle (5) according to one of the claims 1 through 6, **characterized in that** the cooling channels constitute 40% to 70%, preferably 50% to 60% of the cross-sectional area of the core piece (10).

8. Injection mould for thermosetting plastic materials with a moulding plate (1) that is provided with an injection channel that ends in an injection opening and with an injection nozzle (5) according to one of the claims 1 through 7 that is thermally insulated relative to the moulding plate (1).

9. Injection mould according to claim 8, **characterized in that** there is provided a bore (8) in the moulding plate (1), said bore communicating with a bore (16) of the nozzle tip (12 of the injection nozzle (5), and that the diameter of bore (7a) of moulding plate (1) is larger than that of the bore (16) in the nozzle tip (12).

10. Injection mould according to one of the claims 8 or 9, **characterized in that** an area adapted to radially support and guide the injection nozzle (5) is provided in the moulding plate (1) on the outer face of the sleeve (11) in the region of the nozzle tip (12).

## Revendications

1. Injecteur (5) pour l'introduction de matières plastiques thermodurcissables dans un moule pour injection, avec un corps de base sensiblement cylindrique, à l'extrémité duquel est fixée une pointe de buse (12) qui est destinée à s'appliquer sur une plaque-modèle (1), sous l'effet de la pression, un conduit d'alimentation (15) pour la matière à injecter étant prévu dans le sens longitudinal du corps de base, par ailleurs, un conduit de refroidissement (14) étant prévu pour refroidir l'injecteur (5) et une surface d'application (13) étant prévue dans la région de l'extrémité du corps de base cylindrique qui est opposée à la pointe de buse (12), pour presser l'injecteur (5) sur la plaque-modèle,
**caractérisé en ce que** le corps de base de l'injecteur (5) présente un noyau (10) qui est entouré par une gaine (11) de forme sensiblement tubulaire, **en ce que** la pointe de buse (12) et la surface d'application sont fixement reliées au noyau (10) et **en ce que** le noyau (10) est conçu de manière comprimable par élasticité dans le sens longitudinal et guidé dans la gaine (11) dans le sens axial, avec une mobilité limitée.

2. Injecteur (5), selon la revendication 1,
**caractérisé en ce que** le conduit de refroidissement (14) est formé par une cavité qui est limitée par le noyau (10) et par la gaine (11).

3. Injecteur (5), selon la revendication 2,
**caractérisé en ce que** le conduit de refroidissement (14) est essentiellement formé par une rainure hélicoïdale fraisée sur le pourtour extérieur du noyau (10).

4. Injecteur (5), selon l'une quelconque des revendications 1 à 3,
**caractérisé en ce que** le noyau (10) et la gaine (11) sont reliés entre eux dans la région de la pointe de buse (12) et **en ce que**, dans la région du corps de base cylindrique qui est opposée à la pointe de la buse (12), ils sont étanchés l'un contre l'autre de manière coulissante, dans le sens axial.

5. Injecteur (5) selon l'une quelconque des revendications 1 à 4,
**caractérisé en ce que** des bagues d'étanchéité sont prévues sur la face extérieure de la gaine (11), dans la région opposée à la pointe de buse (12), pour étancher l'injecteur (5) par rapport au trou qui le recueille.

6. Injecteur (5) selon l'une quelconque des revendications 1 à 5,
**caractérisé en ce que** la surface d'application (13) est formée par une surface frontale (13) du noyau (10).

7. Injecteur (5) selon l'une quelconque des revendications 1 à 6,
**caractérisé en ce que** les conduites de refroidissement correspondent à 40 % à 70 %, de préférence 50 % à 60 % de la surface de section du noyau (10).

8. Moule à injection pour des matières plastiques thermodurcissables, avec une plaque-modèle (1) qui présente un conduit d'injection, lequel débouche dans un orifice d'injection et avec un injecteur (5), selon l'une quelconque des revendications 1 à 7, thermiquement isolé par rapport à la plaque-modèle (1).

9. Moule à injection selon la revendication 8,
**caractérisé en ce qu'**un trou (8) qui est relié avec le trou (16) de la pointe de buse (12) de l'injecteur (5) est prévu dans la plaque-modèle (1) et **en ce que** le diamètre du trou (7a) de la plaque-modèle (1) est supérieur à celui du trou (16) de la pointe de buse (12).

10. Moule à injection selon l'une quelconque des revendications 8 ou 9, **caractérisé en ce qu'**une surface pour le soutien radial et le guidage de l'injecteur (5) est prévue dans la plaque-modèle (1), sur la surface extérieure de la gaine (11), dans la région de la pointe de buse (12).
